(19) Europäisches Patentamt
European Patent Office
Office européen des brevets

(11) **EP 2 975 553 A1**

(12) **DEMANDE DE BREVET EUROPEEN**

(43) Date de publication:
**20.01.2016 Bulletin 2016/03**

(51) Int Cl.:
***G06K 9/00*** (2006.01)

(21) Numéro de dépôt: **15176000.6**

(22) Date de dépôt: **09.07.2015**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA**

(30) Priorité: **15.07.2014 FR 1456767**

(71) Demandeur: **Morpho**
**92130 Issy-les-Moulineaux (FR)**

(72) Inventeurs:
• **ROUH, Alain**
  **92445 ISSY LES MOULINEAUX (FR)**
• **BEAUDET, Jean**
  **92445 ISSY LES MOULINEAUX (FR)**
• **ROSTAING, Laurent**
  **92445 ISSY LES MOULINEAUX (FR)**

(74) Mandataire: **Maillet, Alain**
  **Cabinet Le Guen Maillet**
  **5, place Newquay**
  **B.P. 70250**
  **35802 Dinard Cedex (FR)**

(54) **PROCÉDÉ ET SYSTÈME D'AUTODÉTERMINATION DES VALEURS DES PARAMÈTRES INTRINSÈQUES ET DES PARAMÈTRES EXTRINSÈQUES D'UNE CAMÉRA PLACÉE AU BORD D'UNE CHAUSSÉE**

(57)     La présente invention concerne un procédé d'autodétermination des valeurs des paramètres intrinsèques et des paramètres extrinsèques d'une caméra placée au bord d'une chaussée.

Ce procédé est caractérisé en ce qu'il comporte :
- une étape E10 de détection d'un véhicule passant devant la caméra,
- une étape E20 de détermination, à partir d'au moins une image 2D prise par la caméra du véhicule détecté et d'au moins un modèle 3D de véhicule prédéterminé, des paramètres intrinsèques et extrinsèques de la caméra par rapport au repère de référence du ou des modèles 3D de véhicule prédéterminés de manière qu'une projection dudit ou d'un desdits modèles 3D de véhicule prédéterminés corresponde à ladite ou une des images 2D réellement prise par ladite caméra.

La présente invention concerne un procédé de détermination d'au moins une grandeur physique liée au positionnement de ladite caméra par rapport à ladite chaussée. Elle concerne encore des systèmes prévus pour mettre en oeuvre lesdits procédés. Enfin, elle concerne des programmes d'ordinateur pour la mise en oeuvre desdits procédés.

Fig. 1

EP 2 975 553 A1

**Description**

La présente invention concerne un procédé d'autodétermination des valeurs des paramètres intrinsèques et des paramètres extrinsèques d'une caméra placée au bord d'une chaussée. Elle concerne également un procédé de détermination d'au moins une grandeur physique liée au positionnement de ladite caméra par rapport à ladite chaussée. Elle concerne encore des systèmes prévus pour mettre en oeuvre lesdits procédés. Enfin, elle concerne des programmes d'ordinateur pour la mise en oeuvre desdits procédés.

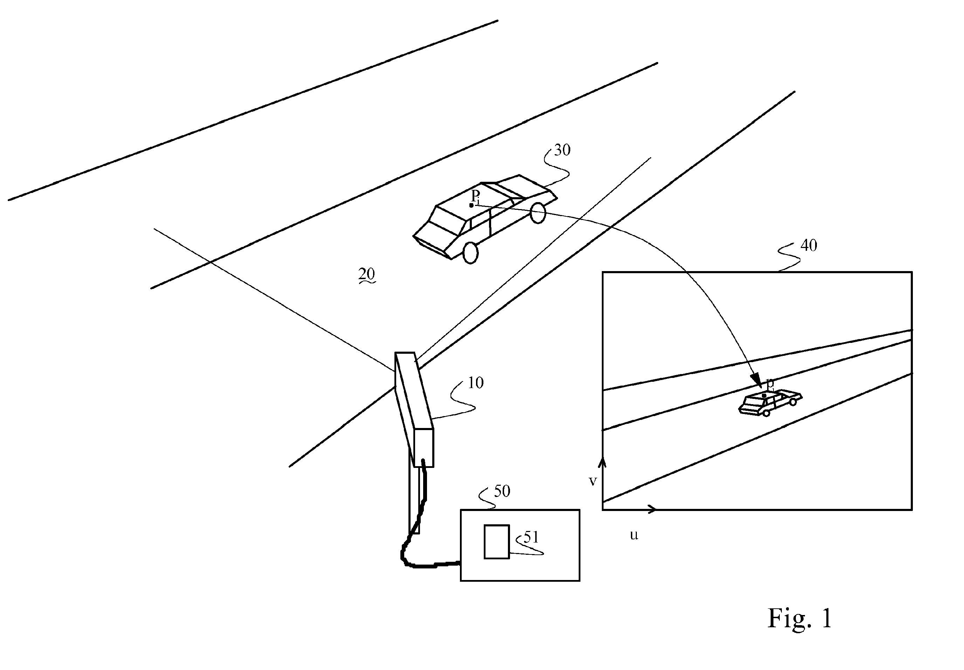

A la Fig. 1, on a représenté une caméra 10 placée au bord d'une chaussée 20 sur laquelle roule une automobile 30 passant devant la caméra 10. La route 20 et la voiture 30 constituent une scène. On a représenté à droite de cette Fig. 1, l'image 2D 40 qui est prise par la caméra 10 à un instant donné.

Dans toute la description qui suit, la caméra 10 est considérée comme étant isolée, mais on comprendra que, selon l'invention, elle pourrait faire partie d'un système de prise de vues à plusieurs caméras, par exemple deux caméras formant alors un système de prise de vues stéréoscopique.

Un modèle simplifié d'une caméra telle que la caméra 10, très généralement utilisé dans le présent domaine de la technique, la considère comme étant un trou d'épingle (pinhole) permettant une projection, dite perspective, des points Pi du véhicule 30 sur le plan image 40. Ainsi, la relation qui lie les coordonnées $(x, y, z)$ d'un point Pi du véhicule 30 et les coordonnées $(u,v)$ du point pi correspondant de l'image 2D 40 peut s'écrire, en coordonnées dites homogènes :

$$\lambda \cdot \begin{pmatrix} u \\ v \\ 1 \end{pmatrix} = [M] \begin{pmatrix} x \\ y \\ z \\ 1 \end{pmatrix} = K[R\ T] \begin{pmatrix} x \\ y \\ z \\ 1 \end{pmatrix}$$

où $\lambda$ est un scalaire arbitraire.

La matrice [M] est une matrice 3x4 de projection perspective qui peut être décomposée en une matrice de positionnement 3x4 [R T] et une matrice de calibration 3x3 [K]. La matrice de calibration [K] est définie par les distances focales $\alpha_u$ et $\alpha_v$ de la caméra en termes de dimensions de pixels selon les axes u et v de l'image 40 ainsi que par les coordonnées $u_0$ et $v_0$ du point origine de l'image 2D 40 :

$$[K] = \begin{vmatrix} \alpha_u & & u_0 \\ & \alpha_v & v_0 \\ & & 1 \end{vmatrix}$$

Quant à la matrice de positionnement [R T], elle est composée d'une matrice rotation 3x3 et d'un vecteur de translation T à 3 dimensions qui définissent par leurs composantes respectives le positionnement (distance, orientation) du repère de la scène par rapport à la caméra 10.

On pourra se reporter pour plus de précisions sur le modèle qui vient d'être décrit au livre intitulé "Multiple View Geometry in computer vision" de R. Hartley and A. Zisserman paru aux éditions Cambridge university press et notamment au chapitre 6 de ce livre.

De manière générale, les coefficients de la matrice de calibration [K] sont des paramètres intrinsèques de la caméra concernée alors que ceux de la matrice de positionnement [R T] sont des paramètres extrinsèques.

Ainsi, dans la demande de brevet US20100283856, un véhicule est utilisé pour effectuer la calibration de la caméra, étant entendu que la calibration dont il s'agit est la détermination de la matrice de projection [M]. Le véhicule en question présente des marqueurs dont les positions relatives sont connues. Alors que le véhicule passe devant la caméra, une image 2D est prise en un premier lieu et une autre image 2D à un second lieu. Ce sont les images de ces marqueurs dans chacune des images 2D qui sont utilisées pour calculer la matrice de projection [M].

Le but de la présente invention est de proposer un procédé d'autodétermination des valeurs des paramètres intrinsèques et des paramètres extrinsèques d'une caméra placée au bord d'une chaussée. On entend par "autodétermination", le fait que le système soit capable, sans mise en oeuvre d'une procédure particulière de mesure et/ou d'utilisation d'un véhicule porteur de marqueurs, tel que celui qui est utilisé par le système du brevet US20100283856, par la seule mise en oeuvre de ce procédé d'autodétermination, de déterminer les valeurs de tout ou partie des paramètres de la matrice de projection [M].

A cet effet, la présente invention concerne un procédé d'autodétermination des valeurs des paramètres intrinsèques et des paramètres extrinsèques d'une caméra placée au bord d'une chaussée qui est caractérisé en ce qu'il comporte :

- une étape de détection d'un véhicule passant devant la caméra,
- une étape de détermination, à partir d'au moins une image 2D prise par la caméra du véhicule détecté et d'au moins un modèle 3D de véhicule prédéterminé, des paramètres intrinsèques et extrinsèques de la caméra par rapport au repère de référence du ou des modèles 3D de véhicule prédéterminés de manière qu'une projection dudit ou d'un desdits modèles 3D de véhicule prédéterminés corresponde à ladite ou une des images 2D réellement prise par ladite caméra.

La présente invention concerne encore un procédé de détermination d'au moins une grandeur physique liée au positionnement d'une caméra placée au bord d'une chaussée. Ce procédé est caractérisé en ce qu'il comporte :

- une étape de détermination des valeurs des paramètres intrinsèques et des paramètres extrinsèques de ladite caméra par la mise en oeuvre du procédé d'autodétermination qui vient d'être décrit,
- une étape d'établissement, à partir desdites valeurs de paramètres, de la matrice de positionnement de la caméra,
- une étape de calcul de la matrice de la transformation inverse, et
- une étape de déduction, à partir de ladite matrice de positionnement et de la matrice de la transformation inverse, de la ou de chacune desdites grandeurs physiques,
  chaque grandeur physique étant l'une des grandeurs suivantes :
- la hauteur de la caméra par rapport à la route,
- la distance de ladite caméra par rapport au véhicule reconnu,
- la direction de la route par rapport à la caméra,
- l'équation de la route par rapport à la caméra.

La présente invention concerne encore un système d'autodétermination des valeurs des paramètres intrinsèques et des paramètres extrinsèques d'une caméra placée au bord d'une chaussée qui est caractérisé en ce qu'il comporte :

- des moyens pour détecter un véhicule passant devant la caméra,
- des moyens pour déterminer, à partir d'au moins une image 2D prise par la caméra du véhicule détecté et d'au moins un modèle 3D de véhicule prédéterminé, des paramètres intrinsèques et extrinsèques de la caméra par rapport au repère de référence du ou des modèles 3D de véhicule prédéterminés de manière qu'une projection dudit ou d'un desdits modèles 3D de véhicule prédéterminés corresponde à ladite ou une des images 2D réellement prise par ladite caméra.

Enfin, elle concerne des programmes d'ordinateur pour la mise en oeuvre des procédés qui viennent d'être décrits.

Les caractéristiques de l'invention mentionnées ci-dessous, ainsi que d'autres, apparaîtront plus clairement à la lecture de la description suivante d'exemples de réalisation, ladite description étant faite en relation avec les dessins joints, parmi lesquels :

La Fig. 1 est une vue d'une scène d'un véhicule passant devant une caméra reliée à un système de traitement d'images pour la mise en oeuvre du procédé de l'invention,
La Fig. 2a est un diagramme illustrant le procédé d'autodétermination des valeurs absolues des paramètres intrinsèques et des paramètres extrinsèques d'une caméra selon un premier mode de réalisation de l'invention,
La Fig. 2b est un diagramme illustrant le procédé d'autodétermination des valeurs absolues des paramètres intrinsèques et des paramètres extrinsèques d'une caméra selon un second mode de réalisation de la présente invention,
La Fig. 3 est un diagramme illustrant une étape du procédé d'autodétermination de l'invention selon un premier mode de réalisation,
La Fig. 4 est un diagramme illustrant une même étape du procédé d'autodétermination d'invention selon un second mode de réalisation,
La Fig. 5 est un diagramme illustrant un procédé de détermination d'au moins une grandeur physique liée au positionnement d'une caméra par rapport à la chaussée, et
La Fig. 6 est un schéma synoptique d'un système de traitement d'images pour la mise en oeuvre du procédé de l'invention.

Le procédé d'autodétermination des paramètres intrinsèques et extrinsèques d'une caméra 10 (voir Fig. 1) de la présente invention est mis en oeuvre dans une unité 50 de traitement d'images prévue pour recevoir les images 2D, prises par la caméra 10, d'un véhicule 30 roulant sur une chaussée 20.

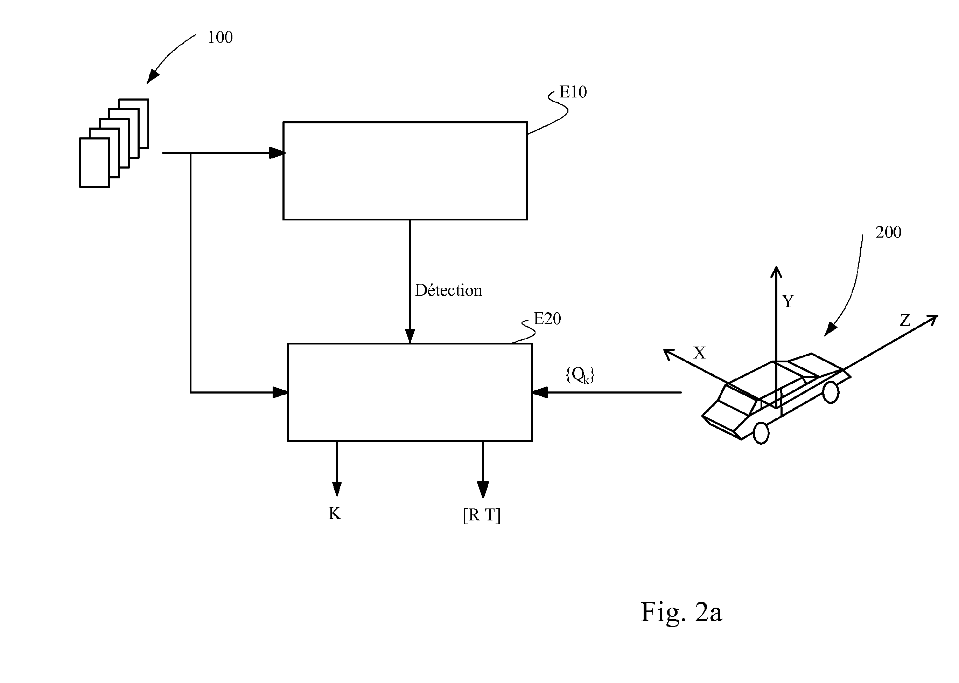

Dans un premier mode de réalisation de l'invention représenté à la Fig. 2a, la première étape E10 est une étape de détection d'un véhicule 30 passant devant la caméra 10. Par exemple, cette détection est réalisée à partir d'une image prise par la caméra 10 ou d'images d'une séquence d'images 2D 100 prises par la caméra 10, la détection étant alors complétée par un processus de suivi (tracking en terminologie anglo-saxonne). Un processus tel que celui qui est décrit pour la détection de plaques d'immatriculation dans la thèse de Louka Dlagnekov à l'université of Californie à San Diego, intitulée "Video-based Car Surveillance : License Plate, Make and Model Recognition" publiée en 2005 peut ainsi être utilisé pour cette étape E10.

Une seconde étape de procédé E20 est une étape de détermination, à partir d'au moins une image 2D 100, prise par la caméra 10, du véhicule détecté à l'étape E10 et d'au moins un modèle 3D de véhicule prédéterminé 200 parmi un ensemble de modèles 3D de véhicule prédéterminés de différentes catégories (par exemple de différents modèles de véhicule de différentes marques), des paramètres intrinsèques et extrinsèques de la caméra 10 par rapport au repère de référence du ou des modèles 3D de véhicule prédéterminés 200 de manière qu'une projection par la caméra 10 dudit ou d'un desdits modèles 3D de véhicule prédéterminé 200 corresponde à ladite ou une des images 2D 100 réellement prise par ladite caméra 10.

Selon la terminologie de la présente description, un modèle 3D de véhicule prédéterminé est un ensemble de points Qk de coordonnées (x, y, z) dans un repère particulier, dit repère de référence. Par exemple, l'axe des abscisses X de ce repère de référence est un axe transversal du véhicule, l'axe des ordonnées Y est l'axe vertical du véhicule et l'axe des profondeurs Z est l'axe longitudinal du véhicule. Quant à l'origine O de ce repère de référence, elle est par exemple la projection selon l'axe des ordonnées Y du barycentre dudit véhicule sur un plan parallèle au plan (X,Z) et tangent à la partie basse des roues du véhicule normalement en contact avec le sol. Le ou chaque modèle 3D de véhicule prédéterminé est par exemple stocké dans une base de données 51 de l'unité 50, à la Fig. 1.

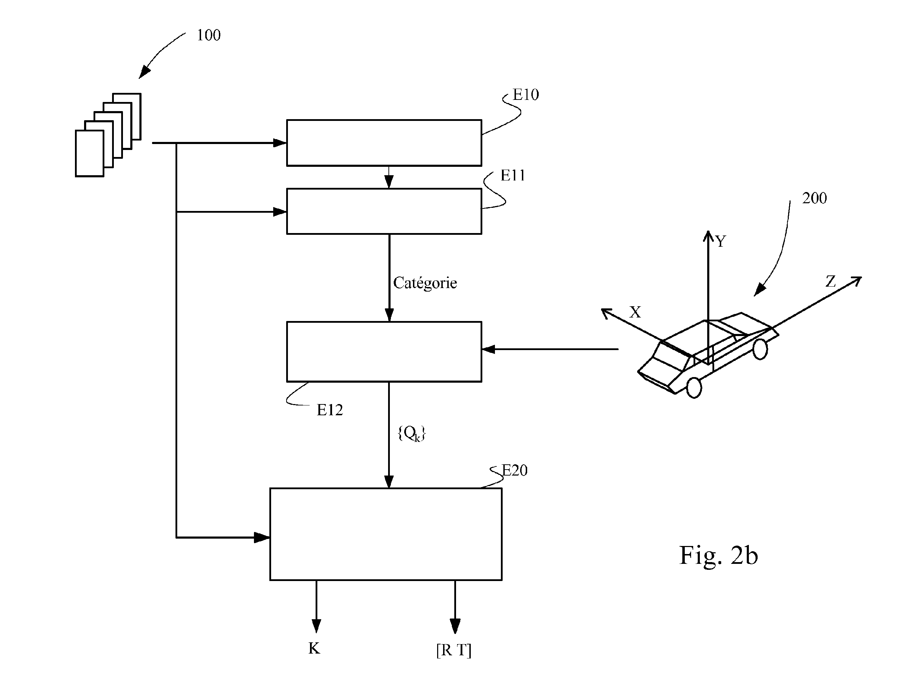

Afin de limiter le nombre de modèles 3D de véhicule prédéterminés à utiliser à l'étape E20, un second mode de réalisation représenté à la Fig. 2b du procédé d'autodétermination comporte encore :

- une étape E11 de reconnaissance, à partir d'une image 2D ou d'au moins une image d'une séquence d'images 2D prises par la caméra 10, d'au moins une caractéristique de véhicule du véhicule détecté à l'étape de détection E10, et
- une étape E12 d'association à ladite ou des caractéristiques de véhicule reconnues à l'étape E11, au moins un modèle 3D de véhicule prédéterminé 200.

Le ou les modèles 3D de véhicule prédéterminés {Qk} qui sont considérés à l'étape de détermination E20 sont alors le ou les modèles 3D de véhicule prédéterminés qui ont été associés, à l'étape E12, à la ou les caractéristiques de véhicule reconnues à l'étape E11.

La caractéristique de véhicule dont il s'agit ici peut être liée à un véhicule particulier (la voiture immatriculée xxxx), à un modèle particulier de véhicule (les véhicules de marque Simca Plein Ciel), ou un ensemble de modèles de véhicule (les véhicules de marques Peugeot®, tout modèle confondu).

La caractéristique ou les caractéristiques de véhicule qui peuvent être utilisées sont, par exemple, des caractéristiques SIFT (Scale invariant feature transform) présentées dans l'article de Lowe, David G. intitulé "Distinctive Image Features From Scale-Invariant Keypoints" publié dans International journal of computer vision 60.2 (2004) p91-110, des caractéristiques SURF (Speed Up Robust Features) présentées dans le document de Herbert Bay, Tinne Tuytelaars et Luc Van Gool intitulé « SURF: Speeded Up Robust Featatires » et publié dans 9th European Conference on Computer Vision, Graz, Autriche, 7-13 mai 2006, des descripteur de formes, etc.. Ces caractéristiques peuvent également être liées à l'apparence dudit véhicule (vecteurs dits Eigenface ou Eigencar).

Ainsi, l'étape E11 du procédé de l'invention peut mettre en oeuvre une méthode qui est généralement appelée "méthode de reconnaissance de "marque et modèle" (Make and Model Recognition). Pour des précisions sur la mise en oeuvre de cette méthode, il est possible de se reporter à la thèse de Louka Dlagnekov déjà mentionnée ci-dessus.

La caractéristique dont il s'agit peut également être une caractéristique qui identifie univoquement un véhicule particulier, par exemple un numéro d'immatriculation sur la plaque d'immatriculation de ce véhicule. L'étape E11 consiste à reconnaître ce numéro d'immatriculation. La thèse de Louka Dlagnokov déjà mentionnée décrit également des méthodes de reconnaissance de plaques d'immatriculation.

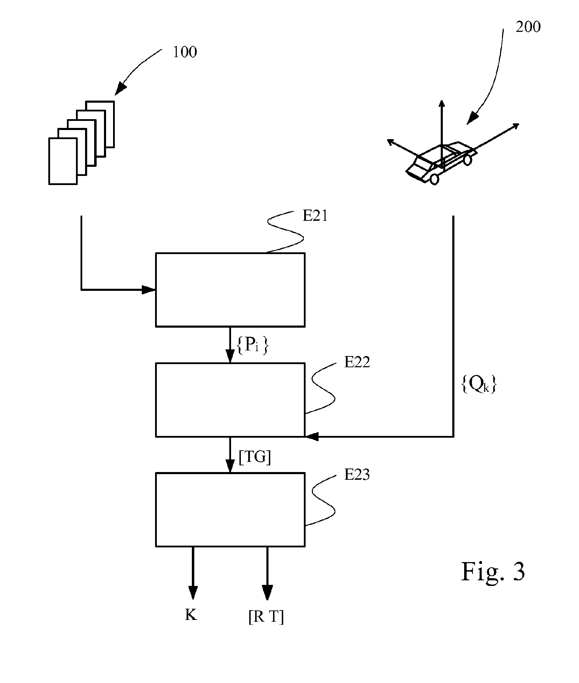

Deux modes de réalisation sont envisagés pour la mise en oeuvre de l'étape E20 du procédé d'autodétermination de l'invention décrite ci-dessus en relation avec les Figs. 2a et 2b. On décrit maintenant le premier de ces modes en relation avec la Fig. 3.

Dans une première sous-étape E21, à partir d'au moins deux images 2D 100 d'une séquences d'images 2D prises par la caméra 10 à différents instants t0 à tn alors que le véhicule 30 détecté à l'étape E10 passe devant la caméra 10, est établi un modèle 3D dudit véhicule 30. Le modèle 3D en question est un modèle qui correspond au véhicule 30 qui se trouve réellement devant la caméra 10, contrairement au modèle 3D de véhicule prédéterminé. Un tel modèle 3D du véhicule 30 est un ensemble de points Pi de coordonnées prises dans un repère lié à la caméra qui, projetés par la caméra 10 à un temps arbitraire, par exemple au temps t0, forment un ensemble de points pi0 dans une image 2D, notée I0, formée par la caméra 10. A un temps tj, le véhicule s'est déplacé par rapport au temps t0, mais pour la caméra 10, il a subi une rotation de matrice [Rj] et une translation de vecteur Tj. Ainsi, un point Pi du véhicule détecté est, à un temps tj, projeté par la caméra 10 en un point de projection $\tilde{p}_{ij}$ de l'image Ij, tel que :

$$\tilde{p}_{ij} = K \begin{bmatrix} R_j & T_j \end{bmatrix} P_i$$

où K est une matrice de calibration et [Rj Tj] est une matrice de positionnement.

Par convention, on considère la position du véhicule par rapport à la caméra au temps t0 de prise de la première image de la séquence d'images 2D comme étant la position de référence si bien que la matrice de positionnement à ce temps t0 est alors la matrice [I 0].

Ensuite, est mise en oeuvre une méthode dite d'ajustement de faisceaux (bundle adjustment - Voir par exemple l'article de Triggs Bill and all intitulé "Bundle adjustement - a moderne synthesis", publié dans Vision Algorithmes: Theory & Practice, Springer Berlin Heidelberg, 2000, pages 298 à 372) qui consiste à considérer plusieurs points Pi de coordonnées différentes et, de là, à faire évoluer les valeurs des paramètres des matrices de calibration [K] et de la matrice de positionnement [$R_j$ $T_j$], et, pour chaque ensemble de valeurs de paramètres et de coordonnées de points Pi, à d'abord déterminer à l'aide de la relation ci-dessus les points projetés $\tilde{p}_{ij}$ puis à les comparer aux points $p_{ij}$ réellement observés sur une image Ij et à ne retenir que les points Pi et les valeurs de paramètres de la matrice de positionnement [Rj Tj] et de la matrice de calibration [K] qui maximisent l'adéquation entre les points $\tilde{p}_{ij}$ et les points $p_{ij}$, c'est-à-dire ceux qui minimisent les distances entre ces points. On peut donc écrire :

$$(P_i, \begin{bmatrix} R_j & T_j \end{bmatrix} K)_{optimisation} = \arg\min \left( \sum_{i,j} \left\| \tilde{p}_{ij} - p_{ij} \right\|^2 \right)$$

La résolution de cette équation peut être réalisée au moyen d'un algorithme d'optimisation des moindres carrés non linéaires de Levenberg-Marquardt.

Avantageusement, la méthode d'ajustement de faisceau est mise en oeuvre après une phase d'initialisation des paramètres intrinsèques et extrinsèques ainsi que des coordonnées des points Pi du modèle 3D du véhicule détecté, ceci afin d'éviter qu'elle converge vers une solution sous-optimale tout en limitant la consommation de ressources de calcul.

Les paramètres intrinsèques de la caméra peuvent par exemple être initialisés au moyen des informations contenues dans sa fiche technique ou obtenues empiriquement, comme son rapport focal/taille de pixel pour chacun des axes de son capteur. De même, le point principal peut être considéré comme étant au centre de l'image 2D. Les valeurs contenues dans ces informations, sans être précises, sont des approximations convenables.

Pour l'initialisation des paramètres extrinsèques, on peut procéder de la manière suivante. On détermine d'abord à partir d'un certain nombre de correspondances établies entre des points pij de l'image Ij et des points pi0 de la première image I0 une matrice E dite essentielle qui vérifie la relation suivante :

$$\left( K^{-1} p_{ij} \right)^T E \left( K^{-1} p_{i0} \right) = 0$$

Pour plus de précisions sur ce processus, on pourra se reporter au livre intitulé "Multiple View Geometry in computer vision" de R. Hartley and A. Zisserman paru aux éditions Cambridge University Press et notamment à son chapitre 11.7.3.

On calcule ensuite à partir de cette matrice essentielle E, les matrices [$R_j$ $T_j$] pour les différents temps tj. Pour plus de précisions sur ce processus, on pourra se reporter au chapitre 9.6.2 du même livre mentionné ci-dessus.

Enfin, pour l'initialisation des coordonnées 3D des points Pi, on peut utiliser des couples d'images Ij et Ij' et des correspondances de points pij et pij' dans ces couples d'images. La caméra considérée ici a pour paramètres intrinsèques et extrinsèques les paramètres ci-dessus estimés à des fins d'initialisation. Pour plus de précisions sur ce processus, on pourra se reporter au chapitre 10 du livre mentionné ci-dessus.

A l'issue de cette première sous-étape E21, on dispose d'un modèle 3D du véhicule détecté défini à un facteur d'échelle près et non aligné, c'est-à-dire d'un ensemble de points Pi de ce véhicule alors qu'il se trouve dans la position de référence mentionnée ci-dessus (position au temps t0).

Dans une seconde sous-étape E22, le modèle 3D du véhicule détecté est aligné à au moins un modèle 3D de véhicule prédéterminé {Qk}. Dans le second mode de réalisation envisagé ci-dessus en relation avec la Fig. 2b, le ou les modèles 3D de véhicule prédéterminés considérés ici sont ceux qui ont été associés, à l'étape E12, à la ou les caractéristiques de véhicule reconnues à l'étape E11.

Pour cet alignement, on recherche les paramètres d'une transformation géométrique de matrice [TG] qui, appliquée à l'ensemble ou à chaque ensemble de points Qk du ou de chaque modèle 3D de véhicule prédéterminé, permet de retrouver l'ensemble de points Pi formant le modèle 3D du véhicule détecté.

La matrice [TG] peut être décomposée en une matrice de changement d'échelle $[S_M]$ et une matrice d'alignement $[R_M \ T_M]$ où $R_M$ est une matrice de rotation et $T_M$ est un vecteur translation. La matrice de changement d'échelle $[S_M]$ est une matrice 4x4 qui peut s'écrire sous la forme :

$$[S_M] = \begin{vmatrix} I_3 & 0 \\ 0 & s_M \end{vmatrix}$$

où $s_M$ est un rapport d'échelle.

Si l'on dispose d'une deuxième caméra qui est calibrée par rapport à la première caméra 10 (on notera que, dans ce cas, du fait que l'on considère des caméras calibrées entre elles, on ne cherche uniquement que les paramètres extrinsèques de la caméra 10 par rapport à la route), on peut établir à partir d'un couple d'images unique, par des méthodes standard de stéréoscopie, un modèle du véhicule détecté tel que $s_M$ soit égal à 1.

Par contre, si l'on ne dispose pas d'une telle deuxième caméra calibrée par rapport à la première caméra 10, on peut procéder de la manière qui suit. Pour un certain nombre de valeurs du rapport d'échelle $s_M$, on détermine la matrice d'alignement $[R_M \ T_M]$. Pour ce faire, on peut utiliser l'algorithme ICP (itérative closest point) qui est décrit par Besl, Paul J. and Neil D. Mckay dans un article intitulé "Method for registration of 3-D shapes" et paru an 1992 dans "Robotics-DL tentative", International Society for Optics and Photonics.

Pour chaque valeur de rapport d'échelle $s_M$, on établit un score d'alignement s de bonne correspondance, par exemple égal au nombre de points Pi qui se trouvent à au plus une distance d de points Pk tels que :

$$\|P_i P_k\| < d$$

avec

$$P_k = S_M[R_M \quad T_M]Q_k$$

On sélectionne ensuite la valeur de rapport d'échelle $s_M$, et les valeurs correspondantes des paramètres de la matrice d'alignement $[R_M \ T_M]$ qui ont obtenu le meilleur score d'alignement s. Il s'agit du score s de meilleur alignement.

Si l'on dispose de plusieurs modèles 3D de véhicule prédéterminé, comme précédemment pour un seul modèle 3D de véhicule prédéterminé, on détermine, cette fois-ci pour chaque modèle 3D de véhicule prédéterminé, le meilleur score s d'alignement et on retient ensuite le modèle 3D de véhicule prédéterminé qui a obtenu le meilleur score de meilleur alignement. Le modèle 3D de véhicule prédéterminé retenu correspond à un modèle de véhicule qui peut être de cette manière reconnu.

Dans une troisième sous-étape E23, on détermine les paramètres extrinsèques de la caméra par rapport au référentiel du modèle 3D de véhicule prédéterminé du véhicule reconnu. Pour ce faire, on procède de la manière suivante.

A chaque point pk0 de l'image 2D I0 délivrée par la caméra 10 au temps t0, il y a un point correspondant $Q_k$ dans le modèle 3D de véhicule prédéterminé si bien que l'on peut écrire :

$$pk0 = KS_M[R_M \ T_M] \ Q_k = K[R_M \ T_M] \ Q_k$$

Ainsi, la matrice des paramètres extrinsèques de la caméra relativement au modèle 3D de véhicule prédéterminé du véhicule reconnu est la matrice :

$$[R\ T] = [R_M\ T_M]$$

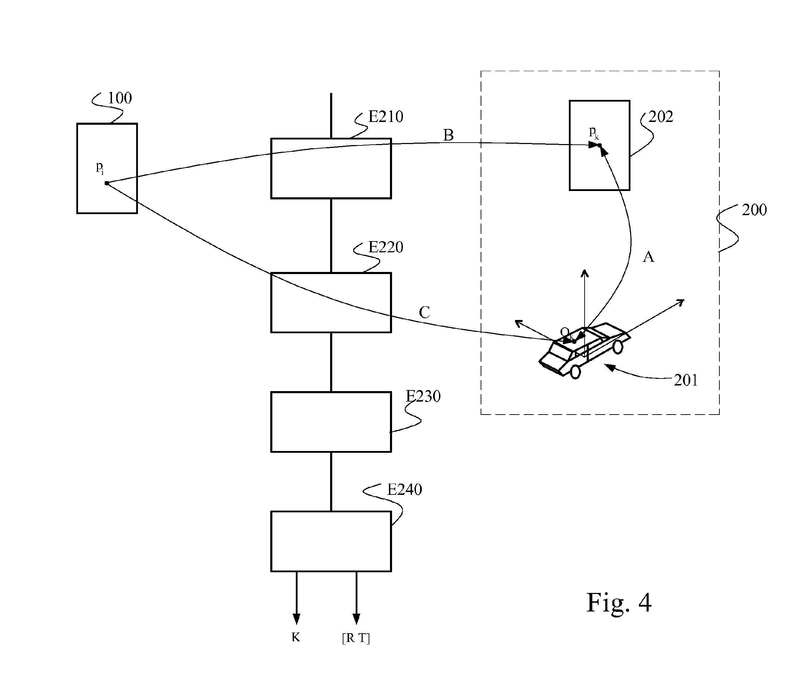

On décrit maintenant en relation avec la Fig. 4 un second mode de réalisation envisagé pour la mise en oeuvre de l'étape E20 mentionnée ci-dessus en relation avec les Figs. 2a et 2b.

Pour ce mode de réalisation, chaque modèle 3D de véhicule prédéterminé 200 dudit ensemble de modèles 3D de véhicule prédéterminés par exemple stockés dans la base de données 51 est constitué non seulement d'un modèle 3D prédéterminé de véhicule proprement-dit 201, c'est-à-dire d'un ensemble de points Qk, mais également des points pk d'au moins une image 2D de référence 202 obtenue par projection, par une caméra, réelle ou virtuelle, également de référence, des points Qk du modèle 3D de véhicule prédéterminé 201. Ainsi, pour chaque modèle 3D de véhicule prédéterminé 200, les points pk de la ou chaque image de référence 202 sont en correspondance avec des points Qk dudit modèle 3D de véhicule prédéterminé proprement-dit 201 (voir flèche A).

On dispose également d'une image 2D 100 réellement prise par la caméra 10 du véhicule 30 détecté à l'étape E10 du procédé de l'invention (voir Figs. 2a et 2b).

Dans une première sous-étape E210, on établit d'abord des correspondances entre des points pi de l'image 2D 100 du véhicule 30 détecté et des points pk de l'image ou d'une image 2D de référence 202 (flèche B), puis, dans une seconde sous-étape E220, des correspondances entre des points pi de l'image 2D 100 du véhicule 30 détecté et des points Qk du modèle 3D de véhicule prédéterminé proprement-dit 201 considéré (flèche C). Comme précédemment, dans le second mode de réalisation envisagé ci-dessus à la Fig. 2b, le ou les modèles 3D de véhicule prédéterminés considérés ici sont ceux auxquels ont été associées, à l'étape E12, la ou les caractéristiques de véhicule qui ont été reconnues à l'étape E11.

On considère que chaque point pi de l'image 2D 100 est le résultat d'une transformation d'un point Qk du modèle 3D de véhicule prédéterminé proprement-dit 201 du véhicule 30 détecté. Cette transformation peut être assimilée à une projection opérée par la caméra 10, opération appelée par la suite pseudo-projection, et l'on peut ainsi écrire:

$$\lambda_i \cdot \begin{vmatrix} p_i \\ 1 \end{vmatrix} = [A]Q_k$$

où [A] est une matrice 3x4 alors dite de pseudo-projection.

Si l'on dispose d'un nombre de correspondances suffisant (généralement au moins 6 correspondances), cette relation traduit un système linéaire surdéterminé, c'est-à-dire dont il est possible de déterminer les coefficients de la matrice de pseudo-projection [A]. Ce calcul de la matrice [A], effectué à l'étape E230, est par exemple décrit au chapitre 7.1 du livre mentionné ci-dessus.

A l'étape suivante E240, on déduit des paramètres ainsi déterminés de ladite matrice de pseudo-projection [A], les paramètres intrinsèques et extrinsèques de ladite caméra.

La matrice de pseudo-projection [A] peut s'écrire sous la forme factorisée suivante :

$$[A] = K\ [R\ T] = [K[R]\ KT]$$

où [R] est la matrice de la rotation de la caméra 10 par rapport au modèle 3D de véhicule prédéterminé du véhicule reconnu et T le vecteur de translation de la caméra par rapport au même modèle 3D de véhicule prédéterminé.

On note [B] la sous-matrice 3x3 à gauche de la matrice de pseudo-projection [A]. On a :

$$[B] = K[R].$$

On peut écrire :

$$[B][B]^T = K[R](K[R])^T = K[R][R]^T K^T = KK^T$$

Si l'on suppose que la matrice de calibration K est écrite sous la forme de la relation (2) ci-dessus, on peut écrire, en développant KK$^T$ :

$$KK^T = \begin{vmatrix} \alpha_u^2 + u_0^2 & u_0 v_0 & u_0 \\ u_0 v_0 & \alpha_v^2 + v_0^2 & v_0 \\ u_0 & v_0 & 1 \end{vmatrix}$$

Le produit [B][B]$^T$ peut s'écrire sous la forme de ces coefficients :

[B][B]$^T$= [b$_{ij}$] avec i, j = 1 à 3.

A partir de la connaissance de [B][B]$^T$= $\lambda$ KK$^T$ obtenue de la matrice [A], il est possible de calculer $\lambda$ (le paramètre $\lambda$ est alors égal à b$_{33}$) et les coefficients de la matrice de calibration K, puis les paramètres de la matrice [R T] = K$^{-1}$ [A].

Alors que le premier mode de réalisation (voir Fig. 3) nécessite une séquence d'au moins deux images, le second mode (Fig. 4) ne nécessite qu'une seule image mais un modèle 3D de véhicule prédéterminé plus élaboré puisqu'associé à une image 2D de référence.

Une fois déterminés les paramètres intrinsèques et extrinsèques de la caméra par rapport au repère des modèles 3D de véhicule prédéterminés (le repère est identique pour tous les modèles 3D) stockés dans la base de données 51 et, ce, au passage devant la caméra 10 d'un véhicule 30 présentant des caractéristiques remarquables qui peuvent être reconnues à l'étape E11, il est possible de déterminer un certain nombre de grandeurs physiques.

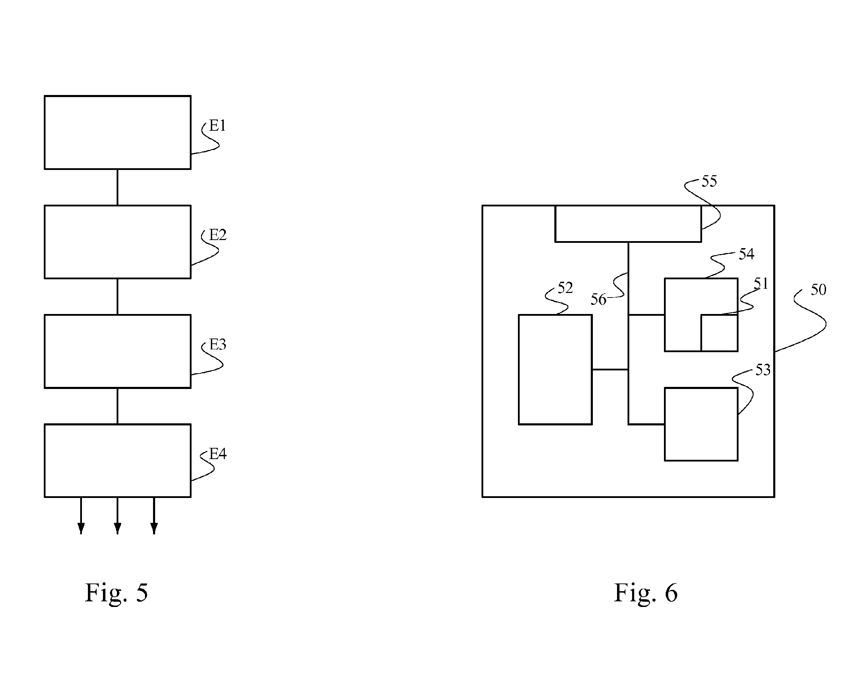

Ainsi, la présente invention concerne un procédé de détermination d'au moins une grandeur physique liée au positionnement d'une caméra placée au bord d'une chaussée. Il comporte (voir Fig. 5) une étape de détermination E1 des valeurs des paramètres intrinsèques et des paramètres extrinsèques de ladite caméra 10 par mise en oeuvre du procédé d'autodétermination qui vient d'être décrit.

Il comporte encore une étape E2 d'établissement, à partir desdites valeurs de paramètres, de la matrice de positionnement de la caméra [R T], puis à une étape E3, de calcul de la matrice [R' T'] de la transformation inverse.

Enfin, il comporte une étape E4 de déduction, à partir de ladite matrice de positionnement [R T] et de la matrice de transformation inverse [R' T'], de la ou de chacune desdites grandeurs physiques de la manière suivante :

- la hauteur h par rapport à la route : h = T'$_z$,
- la distance latérale de la caméra par rapport au véhicule reconnu : d = T$_x$,
- la direction de la route par rapport à la caméra : 3$^{ème}$ colonne de la matrice R,
- l'équation du plan de la route par rapport à la caméra :

$$\begin{bmatrix} 2^{\text{ème}}\text{colonne de matrice } R \\ -T_y \end{bmatrix}^T \cdot \begin{vmatrix} x \\ y \\ z \\ 1 \end{vmatrix} = 0$$

Deux grandeurs restent inconnues.

Il s'agit de la position longitudinale par rapport à la route. Elle peut néanmoins être établie aux moyens de repères le long de la route, du type bornes kilométriques.

Il s'agit encore de la position latérale par rapport à la route (par exemple, la distance au centre de la voie la plus proche). Il est possible de la déterminer à partir non pas du passage d'un seul véhicule, mais à partir des passages de plusieurs véhicules. Ainsi, pour chaque véhicule, on calcule la distance latérale à ce véhicule et on sélectionne la distance latérale la plus faible comme étant la distance au centre de la voie la plus proche. Des analyses statistiques de la distance latérale à la caméra des véhicules passant devant elle, peuvent être utilisées pour estimer la calibration des voies par rapport à la caméra. Ensuite, il est possible de déterminer, pour chaque véhicule passant devant la caméra, le numéro de la voie sur laquelle il se trouve.

On a représenté à la Fig. 6 un système de traitement 50 qui est pourvu d'une unité de traitement 52, d'une mémoire de programme 53, d'une mémoire de données 54 incluant notamment la base de données 51 dans laquelle sont stockés les modèles 3D de véhicule prédéterminés et d'une interface 55 permettant la connexion de la caméra 10, reliés entre eux par un bus 56. La mémoire de programme 53 contient un programme d'ordinateur qui, lorsqu'il est déroulé, met en oeuvre les étapes des procédés qui sont décrits précédemment. Ainsi, le système de traitement 50 contient des moyens pour agir selon ces étapes. Selon le cas, il constitue soit un système d'autodétermination des valeurs des paramètres intrinsèques et des paramètres extrinsèques d'une caméra placée au bord d'une chaussée, soit un système de détermination d'au moins une grandeur physique liée au positionnement d'une caméra placée au bord d'une chaussée.

**Revendications**

1. Procédé d'autodétermination des valeurs des paramètres intrinsèques et des paramètres extrinsèques d'une caméra (10) placée au bord d'une chaussée, **caractérisé en ce qu'**il comporte :

   - une étape E10 de détection d'un véhicule passant devant la caméra,
   - une étape E20 de détermination, à partir d'au moins une image 2D prise par la caméra du véhicule détecté et d'au moins un modèle 3D de véhicule prédéterminé, des paramètres intrinsèques et extrinsèques de la caméra par rapport au repère de référence du ou des modèles 3D de véhicule prédéterminés de manière qu'une projection dudit ou d'un desdits modèles 3D de véhicule prédéterminés corresponde à ladite ou une des images 2D réellement prise par ladite caméra.

2. Procédé d'autodétermination selon la revendication 1, **caractérisé en ce qu'**il comporte encore :

   - une étape E11 de reconnaissance, à partir d'une image 2D ou d'au moins une image d'une séquence d'images 2D, d'au moins une caractéristique de véhicule d'un véhicule détecté à l'étape E10,
   - une étape E12 d'association à la ou lesdites caractéristiques de véhicule reconnues à l'étape E11, au moins un modèle 3D de véhicule prédéterminé parmi un ensemble prédéterminé de modèles 3D de véhicule prédéterminé de différentes catégories de véhicules, et
   **en ce que** le ou les modèles 3D de véhicule prédéterminés qui sont considérés à l'étape de détermination E20 sont au moins un modèle 3D de véhicule prédéterminé qui a été associé, à l'étape E12, à la ou les caractéristiques reconnues à l'étape E11.

3. Procédé d'autodétermination selon la revendication 1 ou 2, **caractérisé en ce que** ladite étape de détermination comporte:

   - une sous-étape E21 d'établissement, à partir d'au moins deux images 2D de ladite séquence d'images, d'un modèle 3D du véhicule détecté à l'étape E10,
   - une sous-étape E22 d'alignement du ou des modèles 3D de véhicule prédéterminé considéré avec le modèle 3D du véhicule reconnu, afin de déterminer les paramètres d'une transformation géométrique qui, appliquée au modèle ou chaque modèle 3D de véhicule prédéterminé considéré, donne le modèle 3D du véhicule reconnu,
   - une sous-étape E23 de déduction, à partir des paramètres de ladite transformation, des paramètres intrinsèques et extrinsèques de ladite caméra.

4. Procédé d'autodétermination selon la revendication 3, **caractérisé en ce que** la sous-étape d'alignement E22 consiste à déterminer les paramètres de ladite transformation géométrique pour différentes valeurs de rapport d'échelle, à établir pour chaque valeur de rapport d'échelle un score d'alignement et à sélectionner la valeur de rapport d'échelle et les paramètres de ladite transformation d'alignement qui ont obtenu le meilleur score d'alignement.

5. Procédé d'autodétermination selon la revendication 3, **caractérisé en ce que** la sous-étape d'alignement E22 consiste à déterminer, pour chaque modèle 3D de véhicule prédéterminé considéré, les paramètres de ladite transformation géométrique pour différentes valeurs de rapport d'échelle, à établir pour chaque valeur de rapport d'échelle un score d'alignement et à sélectionner la valeur de rapport d'échelle et les paramètres de ladite transformation d'alignement qui ont obtenu le meilleur score d'alignement, dit score de meilleur alignement, puis à sélectionner le modèle 3D de véhicule prédéterminé, la valeur de rapport d'échelle et les paramètres de ladite transformation d'alignement qui ont obtenu le meilleur score de meilleur alignement.

6. Procédé d'autodétermination selon la revendication 1 ou 2, **caractérisé en ce que** chaque modèle 3D de véhicule prédéterminé (200) est constitué :

- du modèle 3D de véhicule prédéterminé proprement-dit (201), et
- de points d'au moins une image 2D de référence (202) obtenue par projection, par une caméra, réelle ou virtuelle, de points dudit modèle 3D de véhicule prédéterminé considéré (201), et **en ce que** ledit procédé comporte :
- une sous-étape E210 d'association à des points d'une image 2D prise par la caméra des points de l'image 2D de référence dudit modèle 3D de véhicule prédéterminé considéré,
- une sous-étape E220 d'association auxdits points de l'image 2D prise par la caméra, des points du modèle 3D de véhicule prédéterminé proprement-dit,
- une sous-étape E230 de détermination des paramètres d'une transformation de pseudo-projection qui, appliquée à des points dudit modèle 3D proprement-dit, donne des points de l'image 2D prise par la caméra,
- une sous-étape E240 de déduction, à partir des paramètres de ladite transformation de pseudo-projection, des paramètres intrinsèques et extrinsèques de ladite caméra.

7. Procédé de détermination d'au moins une grandeur physique liée au positionnement d'une caméra placée au bord d'une chaussée, **caractérisé en ce qu'**il comporte :

- une étape de détermination des valeurs des paramètres intrinsèques et des paramètres extrinsèques de ladite caméra par mise en oeuvre du procédé d'autodétermination selon une des revendications précédentes,
- une étape d'établissement, à partir desdites valeurs de paramètres, de la matrice de positionnement de la caméra,
- une étape de calcul de la matrice de la transformation inverse, et
- une étape de déduction, à partir de ladite matrice de positionnement et de la matrice de la transformation inverse, de la ou de chacune desdites grandeurs physiques,
chaque grandeur physique étant l'une des grandeurs suivantes :
- la hauteur de la caméra par rapport à la route,
- la distance de ladite caméra par rapport au véhicule reconnu,
- la direction de la route par rapport à la caméra,
- l'équation de la route par rapport à la caméra.

8. Procédé de détermination d'au moins une grandeur physique selon la revendication 7, **caractérisé en ce que** la ou les grandeurs physiques comprennent la position latérale de la caméra par rapport à la route, déterminée à partir des passages de plusieurs véhicules, en calculant la distance latérale à chaque véhicule et en sélectionnant la distance latérale la plus faible.

9. Système d'autodétermination des valeurs des paramètres intrinsèques et des paramètres extrinsèques d'une caméra (10) placée au bord d'une chaussée (20), **caractérisé en ce qu'**il comporte :

- des moyens pour détecter un véhicule passant devant la caméra,
- des moyens pour déterminer, à partir d'au moins une image 2D prise par la caméra du véhicule détecté et d'au moins un modèle 3D de véhicule prédéterminé, des paramètres intrinsèques et extrinsèques de la caméra par rapport au repère de référence du ou des modèles 3D de véhicule prédéterminés de manière qu'une projection dudit ou d'un desdits modèles 3D de véhicule prédéterminés corresponde à ladite ou une des images 2D réellement prise par ladite caméra.

10. Système d'autodétermination selon la revendication 9, **caractérisé en ce qu'**il comporte encore :

- des moyens pour reconnaître, à partir d'une image 2D ou d'au moins une image d'une séquence d'images 2D, au moins une caractéristique de véhicule d'un véhicule passant devant la caméra (10),
- des moyens pour associer à ladite ou auxdites caractéristiques de véhicule reconnues du véhicule détecté, au moins un modèle 3D de véhicule prédéterminé parmi un ensemble prédéterminé de modèles 3D de différentes catégories de véhicules, et
**en ce que** le ou les modèles 3D de véhicule prédéterminés qui sont considérés par lesdits moyens de détermination sont au moins un modèle 3D de véhicule prédéterminé qui a été associé à la ou les caractéristiques de véhicule reconnues.

11. Système de détermination d'au moins une grandeur physique liée au positionnement d'une caméra placée au bord d'une chaussée, **caractérisé en ce qu'**il comporte :

- des moyens pour déterminer les valeurs des paramètres intrinsèques et des paramètres extrinsèques de ladite caméra par mise en oeuvre du procédé d'autodétermination selon une des revendications 1 à 6,
- des moyens pour établir, à partir desdites valeurs de paramètres, la matrice de positionnement de la caméra,
- des moyens pour calculer la matrice de la transformation inverse, et
- des moyens pour déduire, à partir de ladite matrice de positionnement et/ou de la matrice transformation inverse, la ou de chacune desdites grandeurs physiques, chaque grandeur physique étant l'une des grandeurs suivantes :
- la hauteur de la caméra par rapport à la route,
- la distance de ladite caméra par rapport au véhicule reconnu,
- la direction de la route par rapport à la caméra,
- l'équation de la route par rapport à la caméra.

12. Programme d'ordinateur stocké dans une mémoire d'un système selon la revendication 9 ou 10 prévu, lorsqu'il est exécuté, pour mettre en oeuvre le procédé d'autodétermination selon une des revendications 1 à 6.

13. Programme d'ordinateur stocké dans une mémoire d'un système selon la revendication 11 prévu, lorsqu'il est exécuté, pour mettre en oeuvre le procédé de détermination d'au moins une grandeur physique selon la revendication 7 ou 8.

Fig. 1

Fig. 2a

Fig. 2b

Fig. 3

Fig. 4

Fig. 6

Fig. 5

Europäisches
Patentamt

European
Patent Office

Office européen
des brevets

**RAPPORT DE RECHERCHE EUROPEENNE**

Numéro de la demande

EP 15 17 6000

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | TAN T N ET AL: "MODEL-BASED LOCALISATION AND RECOGNITION OF ROAD VEHICLES", INTERNATIONAL JOURNAL OF COMPUTER VISION, KLUWER ACADEMIC PUBLISHERS, NORWELL, US, vol. 27, no. 1, 1 mars 1998 (1998-03-01), pages 5-25, XP000765201, ISSN: 0920-5691, DOI: 10.1023/A:1007924428535 * page 8, deuxième colonne, et 6.2.; figures 3,6 * | 1-13 | INV. G06K9/00 |
| A | T. N. TAN ET AL: "On Computing The Perspective Transformation Matrix and Camera Parameters", PROCEDINGS OF THE BRITISH MACHINE VISION CONFERENCE 1993, 1 janvier 1993 (1993-01-01), pages 13.1-13.10, XP055159836, DOI: 10.5244/C.7.13 * abstract * | 1 | |
| A | MARCHAND E ET AL: "Robust real-time visual tracking using a 2D-3D model-based approach", COMPUTER VISION, 1999. THE PROCEEDINGS OF THE SEVENTH IEEE INTERNATION AL CONFERENCE ON KERKYRA, GREECE 20-27 SEPT. 1999, LOS ALAMITOS, CA, USA,IEEE COMPUT. SOC, US, vol. 1, 20 septembre 1999 (1999-09-20), pages 262-268, XP010350431, ISBN: 978-0-7695-0164-2 * 4.3 * | 1 | **DOMAINES TECHNIQUES RECHERCHES (IPC)** G06K |

Le présent rapport a été établi pour toutes les revendications

| Lieu de la recherche | Date d'achèvement de la recherche | Examinateur |
|---|---|---|
| La Haye | 25 novembre 2015 | Versluis, Anton |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
.........................................................
& : membre de la même famille, document correspondant

EPO FORM 1503 03.82 (P04C02)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20100283856 A

**Littérature non-brevet citée dans la description**

- **LOUKA DLAGNEKOV.** *Video-based Car Surveillance : License Plate, Make and Model Recognition,* 2005
- **LOWE, DAVID G.** Distinctive Image Features From Scale-Invariant Keypoints. *International journal of computer vision,* 2004, vol. 60.2, 91-110
- **HERBERT BAY ; TINNE TUYTELAARS ; LUC VAN GOOL.** SURF: Speeded Up Robust Featatires. *9th European Conference on Computer Vision,* 07 Mai 2006

- **TRIGGS BILL.** Bundle adjustement - a moderne synthesis. *Vision Algorithmes: Theory & Practice,* 2000, 298-372
- Multiple View Geometry in computer vision. **R. HARTLEY ; A. ZISSERMAN.** Multiple View Geometry in computer vision. Cambridge University Press
- Robotics-DL tentative. **BESL, PAUL J. ; NEIL D. MCKAY.** Method for registration of 3-D shapes. International Society for Optics and Photonics, 1992